# EUROPÄISCHE PATENTSCHRIFT

(11) **EP 4 158 331 B1**
(45) Veröffentlichungstag und Bekanntmachung des Hinweises auf die Patenterteilung: **09.07.2025**
(21) Anmeldenummer: 21729424.8
(22) Anmeldetag: 21.05.2021
(51) Int. Cl.: G01N 29/024, B06B 1/02, F02M 65/00, G01N 29/22, G01N 29/24, G01K 11/22

(54) **ULTRASCHALL-MESSANORDNUNG**
ULTRASONIC MEASURING ARRANGEMENT
DISPOSITIF DE MESURE À ULTRASONS

(30) Priorität: 28.05.2020 DE 102020206688
(43) Veröffentlichungstag der Anmeldung: 05.04.2023
(73) Patentinhaber: Robert Bosch GmbH, 70442 Stuttgart (DE)
(72) Erfinder: KIRSCH, Marco, 66636 Tholey-Hasborn (DE); FISCHER, Thomas, 70499 Stuttgart (DE); MAUE, Peter, 66424 Homburg (DE)
(86) Internationale Anmeldenummer: PCT/EP2021/063589
(87) Internationale Veröffentlichungsnummer: WO 2021/239595

(56) Entgegenhaltungen:
- WO-A1-81/00768
- DE-A1- 102015 219 236
- JP-A- 2009 298 157
- US-A1- 2014 275 863

## Beschreibung

Die Erfindung betrifft eine Ultraschall-Messanordnung zur Ermittlung physikalischer Eigenschaften eines flüssigen oder gasförmigen Messmediums innerhalb einer Hochdruckkammer, mit einem Ultraschallsensor zur außenliegenden Anordnung an der Hochdruckkammer über eine Koppelstrecke.

Das Einsatzgebiet der Erfindung erstreckt sich auf vornehmlich kraftfahrzeugtechnische Anwendungen, bei denen physikalische Eigenschaften, wie beispielsweise die Temperatur, von unter Hochdruck stehenden flüssigen oder gasförmigen Messmedien zu ermitteln sind. Im Rahmen einer solchen hydraulischen oder pneumatischen Messung mittels Ultraschallsensor lassen sich bekanntermaßen über thermodynamische Zusammenhänge schnelle Temperaturmessungen im Millisekundenbereich durchführen. So können insbesondere im Rahmen von Einspritzsystemen von Kraftfahrzeugen, beispielsweise Gasinjektoren, hinsichtlich ihres Einspritzverhaltens untersucht werden. Bei den hier interessierenden Hochdruckanwendungen herrschen innerhalb der als Messkammer für die Ultraschall-Messanordnung dienenden Hochdruckkammer Mediendrücke von weit über 10 bar bis hin zu zirka 260 bar.

Unter diesen extremen Druckbedingungen ist eine Aufweitung der Hochdruckkammer zu vermeiden, um Messwertverfälschungen bei der Ultraschallmessung zu vermeiden. Ultraschallsensoren der hier interessierenden Art können nicht direkt mit den vorgenannten hohen Drücken beaufschlagt werden, da dies eine Zerstörung zur Folge haben würde. Eine Signaleinkopplung über herkömmliche einfache Schallkennimpedanzschichten an der Hochdruckkammer scheitert an deren Weichheit, da hieraus die unerwünschte Kammeraufweitung resultieren würde.

### Stand der Technik

Die DE 10 2015 219 236 A1 offenbart eine Ultraschall-Messanordnung als Bestandteil einer Vorrichtung zur Durchflussmessung bei einem Gasinjektor, mit einer Hochdruckkammer zur zumindest mittelbaren Anordnung eines Auslassbereichs des Gasinjektors, mit einer mit der Hochdruckkammer verbundenen Ventileinrichtung, mittels der ein Auslassquerschnitt der Hochdruckkammer und der in der Hochdruckkammer herrschende Druck einstellbar ist, und mit Messmitteln zur Erfassung von physikalischen Eigenschaften des gasförmigen Messmediums. Diese Messmittel umfassen zumindest einen Drucksensor, sowie beispielsweise einen Ultraschallsensor zur schnellen Temperaturerfassung. Die Messmittel sind in oder an der Hochdruckkammer in geeigneter Weise anzuordnen, um unter den herrschenden Hochdruckbedingungen eine zuverlässige Messwertermittlung zu gewährleisten.

Die JP 2009 298157 A offenbart eine Vorrichtung zur Fehlerüberwachung bei der Prüfung einer Volumenänderung in einer Sensorkammer. Die US 2014/275863 offenbart eine Vorrichtung und ein Verfahren zur Analyse der Eigenschaften eines Fluides. Ein dabei verwendetes Sensormodul umfasst ein Transducerelement zur Erzeugung akustischer Signale und zur Umwandlung akustischer Signale. Dabei wird das Sensormodul beispielsweise im Magen einer Kuh angeordnet. Die WO 81/00768 A1 offenbart spezielle Proben für eine Ultraschalluntersuchung. Diese Proben verwenden eine spezielle Arbeitsspitze, die im Wesentlichen aus Titan gemacht ist und an ihrer Spitze mit einer Aluminiumbeschichtung durch Vakuumbedampfung versehen ist.

### Offenbarung der Erfindung

Es ist die Aufgabe der vorliegenden Erfindung, eine Ultraschall-Messanordnung der gattungsgemäßen Art dahin weiter zu verbessern, dass diese ein signalverarbeitungstechnisch zuverlässig auswertbares Nutzsignal bei minimaler Aufweitung in die Hochdruckkammer liefert.

Die Aufgabe wird ausgehend von einer Ultraschall-Messanordnung gemäß dem Oberbegriff von Anspruch 1 in Verbindung mit dessen kennzeichnenden Merkmalen gelöst. Die nachfolgenden Ansprüche geben vorteilhafte Weiterbildungen der Erfindung wider. Der anwendungsbezogene Anspruch 10 ist auf einen Gasinjektor eines Kraftstoffeinspritzsystems für ein Kraftfahrzeug gerichtet.

Die Erfindung schließt die technische Lehre ein, dass die Koppelstrecke eine hochdruckkammerseitige Kunststoffschicht mit hieran angrenzender bedämpfter Leichtmetallschicht umfasst, worauf der außenliegende Ultraschallsensor angeordnet ist. Die Montage kann beispielsweise durch Kleben erfolgen.

Versuche haben ergeben, dass die bei diesem speziellen Schichtaufbau entstehenden Impedanzsprünge des Ultraschallsignals derart gering ausfallen, dass noch genügend Nutzsignal durch die Koppelstrecke gelangt. Andererseits gewährleistet der erfindungsgemäße Schichtaufbau auch eine hinreichende Steifigkeit der Koppelstrecke, so dass eine hinreichend geringe Kammeraufweitung selbst bei hohen Drücken bis hin zu 300 bar entsteht.

Die Leichtmetallschicht dient bei einer erfindungsgemäß aufgebauten Koppelstrecke zur Versteifung des Aufbaus, was eine gewisse Dicke der Leichtmetallschicht erfordert. Überschreitet die Schichtdicke die Wellenlänge der Ultraschallschwingung so kommt es zu schichtinternen Reflektionen in Longitudinalrichtung. Diese müssen so bedämpft werden, um das Nutzsignal nicht zu stören.

Vorzugsweise sollte die Kunststoffschicht im Schichtaufbau der Koppelstrecke aus einem Kunstharz oder einer leichten Glaskeramik bestehen. Aufgrund der recht geringen Materialdichte zeichnen sich diese Werkstoffe durch eine geringe akustische Impedanz aus, so dass es im Verhältnis zur Leichtmetallschicht zu einem vorteilhaft geringen Impedanzsprung entlang des Signalübertragungswegs kommt.

Eine weitere die Erfindung verbessernde Maßnahme kann dadurch erzielt werden, dass bei Verwendung von Kunstharz für die Kunststoffschicht, dieser faserverstärkt ist. Hierfür kommen vor allem herkömmliche Glasfasern oder Kohlenstofffasern zum Einsatz. So kann ein entsprechend faserverstärktes Kunstharzmaterial beispielsweise ein kohlenstofffaserverstärkter Kunststoff (CFK) sein. Die in der Kunststoffschicht enthaltenen Fasern tragen zur Dämpfung des Signals bei, so dass dieses schneller abklingt. Daneben kommt als leichte Glaskeramik beispielsweise auch der Werkstoff Macor^{®} in Betracht, welcher aus einer Glasmatrix mit Glimmerkristallen besteht.

Für eine gute Auskopplung des Ultraschallsignals aus dem Leichtmetall sollte die Schichtdicke der Kunststoffschicht auf die Wellenlänge λ des Ultraschallsignals angepasst werden und im Bereich 0,25 bis 1 λ liegen. Somit ist die Schichtdicke auf die Wandlerfrequenz und die Schallgeschwindigkeit des Kunstoffs anzupassen, um die Auskopplung zu optimieren und ein Nachschwingen zu unterdrücken. Beim hier angegebenen Ausführungsbeispiel ergab sich ein Optimum zwischen 1,8 bis 2,2 mm, vorzugsweise zirka 2 mm Schichtdicke.

Um die Signaldämpfung an den Übergangsstellen Wandler-Leichtmetall und Leichtmetall-Kunststoff möglichst gering zu halten, sollte die Oberflächenrauheit durch Koppelmedium, wie beispielsweise Silikon oder Maschinenfett, ausgeglichen werden.

In Kombination hiermit besteht die bedämpfte Leichtmetallschicht vorzugsweise aus einer Kombination eines Leichtmetallmaterials, beispielsweise Aluminium, Magnesium, Titan oder eine Legierung hiermit, mit einem Dämpfungsmittel, wie beispielsweise Maschinenfett. Dabei sorgt das Leichtmetallmaterial für die erforderliche Steifigkeit der Koppelstrecke, um für die gewünscht geringe Kammeraufweitung zu sorgen.

Gemäß einer die Erfindung weiter verbessernden Maßnahme wird vorgeschlagen, dass die Leichtmetallschicht mit einer in Signalübertragungsrichtung verlaufenden Stegstruktur versehen wird, deren Zwischenräume mit dem Dämpfungsmittel zumindest teilweise befüllt sind. Im einfachsten Falle kann eine solche Stegstruktur in Form von Durchgangsbohrungen einer Aluminiumplatte erzeugt werden. Ferner wird vorgeschlagen, die sensorseitige Öffnungsfläche mit einer dünnen Deckschicht aus dem Leichtmetallmaterial zu versehen, damit das Dämpfungsmittel nicht aus den Bohrungen austreten kann. Die auf der gegenüberliegenden Öffnungsfläche angeordnete Kunststoffschicht sorgt kammerseitig für einen entsprechenden Bohrungsverschluss.

Die Stegstruktur sorgt im Rahmen der Leichtmetallschicht für eine direkte Übertragung des Schalls, wobei das in den Zwischenräumen eingefüllte Dämpfungsmittel, beispielsweise Maschinenfett, Nachschwingen des Signals bedämpft.

Eine solche zur Versteifung dienende Leichtmetallschicht neigt ab einer Schichtdicke von 1 λ zu Nachschwingen und sollte bedämpft werden. Je dicker die Platte ist, desto höher ist die Steifigkeit und desto länger dauert das Nachschwingen. Im Ausführungsbeispiel konnte ein sehr guter Kompromiss bei einer Schichtdicke zwischen 4 mm und 8 mm, vorzugsweise 6 mm gefunden werden.

### Detailbeschreibung anhand Zeichnung

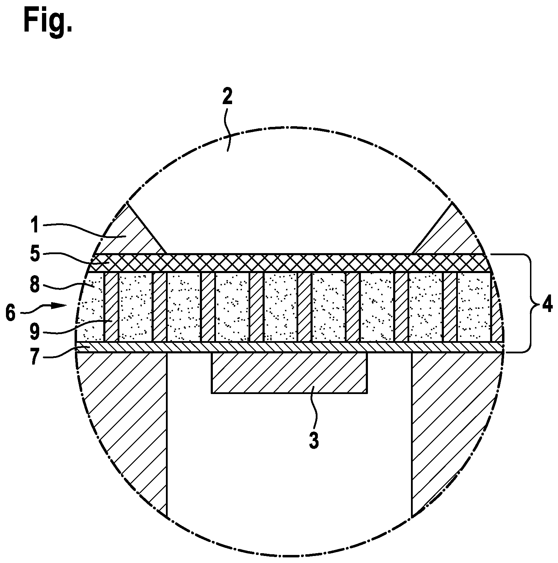

Weitere die Erfindung verbessernden Maßnahmen werden nachstehend gemeinsam mit der Beschreibung eines bevorzugten Ausführungsbeispiels der Erfindung anhand der einzigen Figur dargestellt. Die Figur zeigt einen schematischen Längsschnitt durch eine Ultraschall-Messanordnung an einer Hochdruckkammer eines - nicht weiter dargestellten - Kraftstoffeinspritzsystems für ein Kraftfahrzeug.

Die Ultraschall-Messanordnung befindet sich am Rande einer - hier nur ausschnittsweise dargestellten - Hochdruckkammer 1, die ein dort hindurchfließendes gasförmiges Messmedium 2 in Form eines gasförmigen Kraftstoffs enthält, welcher unter einem Druck von bis zu 300 bar steht.

Physikalische Eigenschaften dieses gasförmigen Messmediums 2, beispielsweise dessen Temperatur, wird über einen außenliegenden Ultraschallsensor 3 mit Sender- und Empfängerfunktionalität ermittelt, der über eine die Hochdruckkammer 1 begrenzenden Koppelstrecke 4 angebunden ist.

Der Ultraschallsensor 3 besteht bei diesem Ausführungsbeispiel aus einer an sich bekannten Piezokeramik. Das vom Ultraschallsensor 3 über die Koppelstrecke 4 in das gasförmige Messmedium 2 hineingesendete Ultraschallsignal wird an einer gegenüberliegenden - nicht weiter dargestellten - Wandung der Hochdruckkammer 1 reflektiert und gelangt in Gegenrichtung durch die Koppelstrecke 4 wieder zum Ultraschallsensor 3, welcher das reflektierte Messsignal empfängt. Aus den hieraus ermittelbaren Laufzeitdifferenzen sowie anderer Signaleigenschaften lässt sich auf Basis der ans ich bekannten thermodynamischen Zusammenhänge beispielsweise die Temperatur des gasförmigen Messmediums 2 berechnen.

Hierfür ist eine übertragungsverlustarme Koppelstrecke 4 erforderlich, um einen genügend hohen Nutzsignalanteil für die Signalauswertung detektieren zu können.

Zu diesem Zweck besitzt die erfindungsgemäße Koppelstrecke 4 einen speziellen Schichtaufbau, der aus einer an die Hochdruckkammer 1 angrenzenden Kunststoffschicht 5 mit hieran angrenzender bedämpfter Leichtmetallschicht 6 besteht, die über eine dünne Abdeckschicht 7 mit dem außenliegenden Ultraschallsensor 3 in Verbindung steht.

Die Kunststoffschicht 5 weist bei diesem Ausführungsbeispiel eine Dicke von zirka 2 mm auf und besteht aus einem faserverstärkten Kunstharz, konkret aus CFK.

Die sich hieran anschließende bedämpfte Leichtmetallschicht 6 weist bei diesem Ausführungsbeispiel eine Schichtdicke von zirka 6 mm auf und besteht aus einem Leichtmetallmaterial, hier Aluminium, welches mit einem Dämpfungsmittel versehen ist. Hierfür weist die Leichtmetallschicht 6 eine in Signalübertragungsrichtung verlaufende Stegstruktur 9 auf, deren Zwischenräume mit dem Dämpfungsmittel 8, hier ein herkömmliches Maschinenfett, befüllt sind.

Experimentelle Versuche mit einem derartigen Schichtaufbau für eine Koppelstrecke 4 haben ergeben, dass bei Befüllung der Hochdruckkammer 1 mit Stickstoff als Testgas unter einem Druck von 30 bar eine Dämpfung von 86,9 db und unter einem Druck von 250 bar eine Dämpfung von 50,8 db auftritt. Dies zeigt, dass die Übertragungsverluste derart gering ausfallen, dass noch genügend Nutzsignal zur Signalauswertung am Ultraschallsensor 3 ankommt. Zugleich gewährleistet der erfindungsgemäße Schichtaufbau der Koppelstrecke 4 eine hinreichend hohe Steifigkeit zur Vermeidung einer übermäßigen Kammeraufweitung, selbst bei hohen Drücken von bis zu 300 bar.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, für die Kunststoffschicht 5 ein anderes Kunststoffmaterial zu verwenden. Für die bedämpfte Leichtmetallschicht kommt als Grundmaterial beispielsweise auch Magnesium oder dergleichen in Betracht und die vorzugsweise hierin eingearbeitete längs verlaufende Stegstruktur kann auch anders als mit einem Bohrlochmuster ausgebildet werden, beispielsweise als Säulenstruktur oder dergleichen.

## Patentansprüche

1. Ultraschall-Messanordnung zur Ermittlung physikalischer Eigenschaften eines flüssigen oder gasförmigen Messmediums (2) innerhalb einer Hochdruckkammer (1) der Ultraschall-Messanordnung, mit einem Ultraschallsensor (3) zur Anordnung an der Hochdruckkammer (1) über eine Koppelstrecke (4) der Ultraschall-Messanordnung,
**dadurch gekennzeichnet, dass** der Ultraschallsensor außenliegend an der Hochdruckkammer angeordnet ist und
die Koppelstrecke (4) eine hochdruckkammerseitige Kunststoffschicht (5) mit hieran angrenzender im Hinblick auf schichtinterne Reflektionen in Longitudinalrichtung bedämpfter Leichtmetallschicht (6) umfasst, worauf der außenliegende Ultraschallsensor (3) angeordnet ist und dass
die bedämpfte Leichtmetallschicht (6) aus der Kombination eines Leichtmetallmaterials mit einem Dämpfungsmittel (8) besteht.

2. Ultraschall-Messanordnung nach Anspruch 1,
**dadurch gekennzeichnet, dass** die Kunststoffschicht (5) aus einem Kunstharz besteht.

3. Ultraschall-Messanordnung nach Anspruch 2,
**dadurch gekennzeichnet, dass** das Kunstharz der Kunststoffschicht (5) faserverstärkt ist.

4. Ultraschall-Messanordnung nach Anspruch 3,
**dadurch gekennzeichnet, dass** die aus einem faserverstärkten Kunstharz bestehende Kunststoffschicht (5) eine Dicke gemäß 0,25 bis 1 λ des Ultraschallsignals aufweist.

5. Ultraschall-Messanordnung nach Anspruch 1,
**dadurch gekennzeichnet, dass** die bedämpfte Leichtmetallschicht (6) eine in Signalübertragungsrichtung verlaufende Stegstruktur (9) aus dem Leichtmetall aufweist, dessen Zwischenräume mit dem Dämpfungsmittel (8) zumindest teilweise befüllt sind.

6. Ultraschall-Messanordnung nach Anspruch 1,
**dadurch gekennzeichnet, dass** als Leichtmetallmaterial Aluminium, Titan, Magnesium oder eine zumindest eines dieser Leichtmetalle enthaltene Legierung, und dass als ein hiermit kombiniertes Dämpfungsmittel (8) ein Maschinenfett zum Einsatz kommt.

7. Ultraschall-Messanordnung nach Anspruch 1,
**dadurch gekennzeichnet, dass** die bedämpfte Leichtmetallschicht (6) eine Dicke zwischen 4 bis 8 Millimetern aufweist.

8. Ultraschall-Messanordnung nach Anspruch 1,
**dadurch gekennzeichnet, dass** der Ultraschallsensor (3) aus einer Piezokeramik hergestellt ist und mit einer kombinierten Sender- und Empfängerfunktionalität ausgestattet ist.

9. Gasinjektor eines Kraftstoffeinspritzsystems für ein Kraftfahrzeug mit einer Ultraschall-Messanordnung nach einem der vorstehenden Ansprüche.

## Claims

1. Ultrasonic measuring arrangement for determining physical properties of a liquid or gaseous measuring medium (2) inside a high-pressure chamber (1) of the ultrasonic measuring arrangement, comprising an ultrasonic sensor (3) for arrangement on the high-pressure chamber (1) via a coupling path (4) of the ultrasonic measuring arrangement,
**characterized in that** the ultrasonic sensor is arranged externally on the high-pressure chamber and the coupling path (4) comprises a layer of plastic (5) on the high-pressure chamber side with an adjoining layer of light metal (6), which is damped with respect to layer-internal reflections in the longitudinal direction and on which the external ultrasonic sensor (3) is arranged, and **in that** the damped layer of light metal (6) consists of the combination of a light-metal material with a damping means (8).

2. Ultrasonic measuring arrangement according to Claim 1,
**characterized in that** the layer of plastic (5) consists of a synthetic resin.

3. Ultrasonic measuring arrangement according to Claim 2,
**characterized in that** the synthetic resin of the layer of plastic (5) is fibre-reinforced.

4. Ultrasonic measuring arrangement according to Claim 3,
**characterized in that** the layer of plastic (5) consisting of a fibre-reinforced synthetic resin has a thickness corresponding to 0.25 to 1 λ of the ultrasonic signal.

5. Ultrasonic measuring arrangement according to Claim 1,
**characterized in that** the damped layer of light metal (6) has a rib structure (9) of the light metal extending in the direction of signal transmission, the gaps of which are at least partially filled with the damping means (8).

6. Ultrasonic measuring arrangement according to Claim 1,
**characterized in that** aluminium, titanium, magnesium or an alloy containing at least one of these light metals is used as the light-metal material and **in that** machine grease is used as a damping means (8) combined therewith.

7. Ultrasonic measuring arrangement according to Claim 1,
**characterized in that** the damped layer of light metal (6) has a thickness of between 4 and 8 millimetres.

8. Ultrasonic measuring arrangement according to Claim 1,
**characterized in that** the ultrasonic sensor (3) is produced from a piezo ceramic and is provided with a combined transmitter and receiver functionality.

9. Gas injector of a fuel injection system for a motor vehicle comprising an ultrasonic measuring arrangement according to one of the preceding claims.

## Revendications

1. Dispositif de mesure par ultrasons pour déterminer les propriétés physiques d'un milieu de mesure liquide ou gazeux (2) à l'intérieur d'une chambre haute pression (1) du dispositif de mesure par ultrasons, comprenant un capteur à ultrasons (3) destiné à être placé sur la chambre haute pression (1) par l'intermédiaire d'une section de liaison (4) du dispositif de mesure par ultrasons,
**caractérisé en ce que** le capteur à ultrasons est agencé à l'extérieur de la chambre haute pression et **en ce que** la section de liaison (4) comprend une couche de matière plastique (5) du côté de la chambre haute pression, avec une couche de métal léger (6) attenante, qui est amortie dans la direction longitudinale à l'égard des réflexions internes de la couche, sur laquelle est agencé le capteur à ultrasons (3) situé à l'extérieur, et **en ce que** la couche de métal léger amortie (6) est constituée de la combinaison d'un matériau en métal léger et d'un agent d'amortissement (8).

2. Dispositif de mesure par ultrasons selon la revendication 1,
**caractérisé en ce que** la couche de matière plastique (5) est constituée d'une résine synthétique.

3. Dispositif de mesure par ultrasons selon la revendication 2,
**caractérisé en ce que** la résine synthétique de la couche de matière plastique (5) est renforcée par des fibres.

4. Dispositif de mesure par ultrasons selon la revendication 3,
**caractérisé en ce que** la couche de matière plastique (5) constituée d'une résine synthétique renforcée par des fibres présente une épaisseur de 0,25 à 1 λ du signal ultrasonore.

5. Dispositif de mesure par ultrasons selon la revendication 1,
**caractérisé en ce que** la couche de métal léger amortie (6) présente une structure en forme de nervure (9) s'étendant dans le sens de transmission du signal, constituée du métal léger dont les espaces intermédiaires sont au moins partiellement remplis par l'agent amortisseur (8).

6. Dispositif de mesure par ultrasons selon la revendication 1,
**caractérisé en ce que** le matériau léger est l'aluminium, le titane, le magnésium ou un alliage contenant au moins l'un de ces métaux légers, et **en ce qu'**une graisse pour machines est utilisée en tant qu'agent amortisseur (8) combiné à ce matériau.

7. Dispositif de mesure par ultrasons selon la revendication 1,
**caractérisé en ce que** la couche de métal léger amortie (6) présente une épaisseur comprise entre 4 et 8 millimètres.

8. Dispositif de mesure par ultrasons selon la revendication 1,
**caractérisé en ce que** le capteur à ultrasons (3) est fabriqué à partir d'une céramique piézoélectrique et est équipé d'une fonctionnalité combinée d'émetteur et de récepteur.

9. Injecteur de gaz d'un système d'injection de carburant pour un véhicule automobile avec un dispositif de mesure à ultrasons selon l'une des revendications précédentes.
